# EUROPEAN PATENT APPLICATION

(11) **EP 3 763 759 A1**
(43) Date of publication of application: **13.01.2021**
(21) Application number: 19763886.9
(22) Date of filing: 21.02.2019
(51) Int. Cl.: C08F 290/06, C08F 2/38, C08F 20/28, C08K 3/08, C08L 33/14

(54) **ACRYLIC RESIN, METHOD FOR PRODUCING SAME, AND FINE METAL PARTICLE DISPERSION**

(30) Priority: 07.03.2018 JP 2018041312
(71) Applicant: NAGASE CHEMTEX CORPORATION, Osaka 550-8668 (JP)
(72) Inventor: WATANABE, Koji, Tatsuno-shi, Hyogo 679-4124 (JP); YAMAGUCHI, Yoshiyuki, Tatsuno-shi, Hyogo 679-4124 (JP)
(74) Representative: Weal, Emily Teresa
(86) International application number: PCT/JP2019/006487
(87) International publication number: WO 2019/171968

(57) **Abstract**

Disclosed is an acrylic resin and a metal fine particle dispersion including the acrylic resin. The acrylic resin contains a unit of a (meth)acrylate monomer A having a polyalkylene glycol moiety and has at least at one end a carboxylic acid group and/or a carboxylic acid salt group.

## Description

### [Technical Field]

The present invention relates to an acrylic resin used as, for example, a dispersant for metal fine particle dispersions, and a method for producing the acrylic resin, and a metal fine particle dispersion.

### [Background Art]

For forming fine electrodes, circuits, and other components of electronics, there has been proposed using a metal fine particle dispersion in which metal fine particles (metal nanoparticles) having a diameter of about several nm to several tens nm are dispersed in a dispersion medium. The metal fine particle dispersion is also known as metal ink or metal paste. The metal paste is an electrically conductive paste containing a binder resin. The metal fine particle dispersion is applied onto a substrate, and by subsequent application of energy, such as heat or light, the metal fine particles are sintered to each other, or the binder resin is cured, so that an electrically conductive film is formed.

Highly active metal fine particles, the sintering of which tend to proceed even at a low temperature, are unstable when viewed as particles. Therefore, various methods have been examined in order to prevent the sintering or aggregation of the metal fine particles with each other, and thereby to improve the storage stability.

Examinations have been carried out to use, for example, an acrylic resin having a specific structure, as a binder resin. Patent Literature 1 discloses a method of using a (meth)acrylic resin with a glass transition temperature of 50 °C or less obtained by polymerizing a monomer mixture containing polyoxyethylene (meth)acrylate monomer. Patent Literature 2 discloses a binder resin for electrically conductive pastes, the binder resin comprising a polymer whose main chain comprises segments derived from a (meth)acrylate monomer and which has a phosphoric acid-based component at the ω-position.

### [Citation List]

### [Patent Literature]

[PTL1] Japanese Laid-Open Patent Application No. 2010-135180
[PTL2] PCT Publication No. WO 2011/001908

### [Summary of Invention]

### [Technical Problem]

For the substrate on which the metal fine particle dispersion is applied, glass and ceramics are used, and a resin (e.g., polyimide, polyethylene terephthalate, polyethylene naphthalate) is also used. When using such a resin as the substrate, it is necessary to set a firing temperature as low as about 100 to 200 °C.

However, the higher the dispersibility and the storage stability of the metal fine particles are, the more difficult it is to allow the firing of the metal fine particles to proceed at a low temperature.

### [Solution to Problem]

One aspect of the present invention relates to an acrylic resin containing a unit of a (meth)acrylate monomerA having a polyalkylene glycol moiety, the acrylic resin having at least at one end a functional group selected from the group consisting of a carboxylic acid group and a carboxylic acid salt group.

Another aspect of the present invention relates to a metal fine particle dispersion including the aforementioned acrylic resin, fine particles of a metal, and a dispersion medium.

Still another aspect of the present invention relates to a method for producing an acrylic resin, the method including: a step of preparing a liquid polymerization mixture containing a (meth)acrylate monomer A having a polyalkylene glycol moiety, a polymerization initiator, and a chain transfer agent, wherein at least one of the chain transfer agent and the polymerization initiator has at least one functional group selected from the group consisting of a carboxylic acid group and a carboxylic acid salt group; and a step of allowing the (meth)acrylate monomer A to polymerize in the liquid polymerization mixture, to synthesize an acrylic resin containing a unit of the (meth)acrylate monomer A and having the functional group at least at one end.

### [Advantageous Effects of Invention]

With the acrylic resin according to the present invention, it is possible to provide a metal fine particle dispersion which includes metal fine particles having improved dispersibility and storage stability, and in which the firing of the metal fine particles is allowed to proceed even at a low temperature.

While the novel features of the invention are set forth particularly in the appended claims, the invention, both as to organization and content, will be better understood and appreciated, along with other objects and features thereof, from the following detailed description taken in conjunction with the drawings.

### [Description of Embodiments]

An acrylic resin according to an embodiment of the present invention contains a (meth)acrylate monomer unitA having a polyalkylene glycol moiety and having at least at one end a functional group selected from the group consisting of a carboxylic acid group and a carboxylic acid salt group.

Note that the acrylic resin herein is meant to encompass a methacrylic resin. Acrylate and methacrylate are sometimes collectively referred to as (meth)acrylate.

Having a polyalkylene glycol moiety and having a carboxylic acid group and/or a carboxylic acid salt group at least at one end of the main chain, the acrylic resin can exhibit excellent performance to serve as a dispersant for metal fine particle dispersions used for forming electrodes, circuits, and the like. The carboxylic acid group and/or the carboxylic acid salt group at the end of the main chain is considered to have a moderate interaction with the metal fine particles.

When the acrylic resin contains a unit of a (meth)acrylate monomer B having a hydrophobic group, in addition to the unit of the (meth)acrylate monomerA, it can function as a dispersant particularly excellent in the balance between hydrophilicity and hydrophobicity. The polyalkylene glycol moiety with hydrophilicity is considered to be interacting with the metal fine particle surfaces. On the other hand, since the moiety with hydrophobicity is located on the further outer side than the polyalkylene glycol moiety when viewed from the metal fine particles, the distance between the metal fine particles is considered to be maintained. Presumably as a result, the dispersibility and the storage stability of the metal fine particles can be improved.

When a carboxylic acid group and/or a carboxylic acid salt group is present at least at one end of the main chain of the acrylic resin, the steric hindrance is considered to be smallerthan that when those groups are not present at the end of the main chain. So, the interaction between the carboxylic acid group and/or the carboxylic acid salt group and the metal fine particles is considered to be strong. Therefore, combined with the good balance between hydrophilicity and hydrophobicity of the acrylic resin, the presence of the carboxylic acid group and/orthe carboxylic acid salt group at the end of the main chain is considered to produce synergistic effects to improve the dispersibility and the storage stability of the metal fine particles. Furthermore, the metal fine particles are considered to have a relatively strong interaction only with the end of the main chain of the acrylic resin, which means that the acrylic resin easily separates from the metal fine particles. Presumably as a result, the firing is allowed to proceed even at a low temperature.

A detailed description will be given below of an acrylic resin according to an embodiment of the present invention and its production method, and a metal fine particle dispersion using the acrylic resin.

### [Acrylic resin]

The acrylic resin contains a unit derived from a (meth)acrylate monomerA having a polyalkylene glycol moiety (hereinafter sometimes referred to as monomerA). The monomer A is a raw material monomer of the acrylic resin. The monomerA is, for example, a mono(meth)acrylate having a polyalkylene glycol moiety. Examples of a polyalkylene glycol corresponding to the polyalkylene glycol moiety include polyethylene glycol, polypropylene glycol, and a copolymer of ethylene glycol and propylene glycol. The monomer A may be of one kind or a combination of two or more kinds. Furthermore, in one kind of monomerA, two or more kinds of polyalkylene glycol moieties may be present.

Examples of the mono(meth)acrylate having a polyalkylene glycol moiety include, but not limited to: a monomer in which the hydroxyl group at one end of the polyalkylene glycol chain is replaced with a (meth)acryloyloxy group; and a monomer in which the hydroxyl group at one end of the polyalkylene glycol chain is replaced with a (meth)acryloyloxy group, and the hydroxyl group at the other end is replaced with -OR (R represents, for example, a hydrocarbon group which may have a substituent). Examples of R include an alkyl group (e.g., C₁₋₂₆ alkyl group, C₁₋₂₀ alkyl group), an alicyclic hydrocarbon group (e.g., cycloalkyl group), and an aryl group (e.g., C₆₋₁₄ aryl group). The substituent that R has is, for example, hydroxyl group, an alkoxy group, and/or an ester group.

Examples of the mono(meth)acrylate having a polyalkylene glycol moiety includes, but not limited to, methoxy polyethylene glycol mono(meth)acrylate, octoxy polyethylene glycol-polypropylene glycol mono(meth)acrylate, lauroxy polyethylene glycol mono(meth)acrylate, stearoxy polyethylene glycol mono(meth)acrylate, stearoxy polyethylene glycol-polypropylene glycol mono(meth)acrylate, allyloxy polyethylene glycol-polypropylene glycol mono(meth)acrylate, and hydroxy-terminated polyethylene glycol mono(meth)acrylate. The "polyethylene glycol-polypropylene glycol" herein means a block copolymer moiety of ethylene glycol and propylene glycol.

Also, (meth)acrylates commercially available under the following tradenames may be used: Light Ester 130MA, Light Ester 041 MA (available from Kyoeisha Chemical Co., Ltd.); NK Ester M-90G, NK Ester M-230G (available from Shin-Nakamura Chemical Co., Ltd.); Blemmer PME, BlemmerAME, Blemmer 50POEP-800B, Blemmer 50AOEP-800B, BlemmerALE, Blemmer PSE, BlemmerASEP, Blemmer PKEP, BlemmerAKEP, Blemmer PME, BlemmerAME, and Blemmer PE-350 (available from NOF Corporation).

Given that the acrylic resin is used as a dispersant for a metal fine particle dispersion, the acrylic resin preferably contains at least a unit of a (meth)acrylate monomer containing a polyethylene glycol unit. In addition, in the unit of the monomer A contained in the acrylic resin, the polyalkylene glycol moiety preferably includes at least a polyethylene glycol moiety. The polymerization of the monomer A having a polyethylene glycol moiety tends to proceed stably, and a desired hydrophilic moiety can be easily provided for the obtained acrylic resin to serve as a dispersant for metal fine particles. Therefore, using the obtained acrylic resin as a dispersant for a metal fine particle dispersion can improve the dispersibility and the storage stability of the metal fine particles.

The number of repeating alkylene glycol units (or oxyalkylene units) in the polyalkylene glycol moiety is preferably 4 to 120, more preferably 9 to 90. The polymerization of the monomer A having such a polyalkylene glycol moiety tends to proceed stably, and a desired hydrophilic moiety can be easily provided forthe obtained acrylic resin to serve as a dispersant for metal fine particles. Therefore, the dispersibility and the storage stability of the metal fine particles can be improved. When two or more kinds of polyalkylene glycol moieties are present in one kind of monomerA (e.g., when the monomerA contains a block copolymer moiety of different alkylene glycols), the sum of the numbers of repeating alkylene glycol units is preferably within the above range.

The acrylic resin preferably has, in addition to the unit derived from the monomerA, a unit derived from a (meth)acrylate monomer B having a hydrophobic group (hereinafter sometimes referred to as monomer B). The monomer B is a raw material monomer of the acrylic resin. By using the unit derived from the monomer B, a desired hydrophobic moiety can be easily provided forthe acrylic resin to serve as a dispersant for metal fine particles. The hydrophobic group may be, for example, a hydrocarbon group (e.g., aliphatic, alicyclic or aromatic hydrocarbon group). The aliphatic hydrocarbon group may be, for example, an alkyl group. The alkyl group is, for example, a C₁₋₂₆ alkyl group, and may be a C₁₋₂₀ alkyl. Specific examples of the alkyl group include methyl, ethyl, propyl, butyl, hexyl, decyl, and stearyl groups. The alicyclic hydrocarbon group is, for example, a cycloalkyl group (e.g., C₄₋₁₀ cycloalkyl group or C₅₋₈ cycloalkyl group, such as cyclopentyl or cyclohexyl group), a crosslinked cyclic hydrocarbon group (e.g., C₆₋₂₀ crosslinked cyclic hydrocarbon group, such as bomyl or isobornyl group). The aromatic hydrocarbon group is, for example, an aryl group (e.g., C₆₋₂₀ aryl group or C₆₋₁₄ aryl group). Specific examples of the aryl group include phenyl group, a tolyl group, and a naphthyl group. The aliphatic hydrocarbon group (e.g., alkyl group) may have, as a substituent, an alicyclic hydrocarbon group and/or an aromatic hydrocarbon group. The alicyclic hydrocarbon group and the aromatic hydrocarbon group may each have an aliphatic hydrocarbon group serving as a substituent. The hydrocarbon group serving as a substituent is selected from the above-exemplified hydrocarbon groups, and examples thereof include a C₁₋₄ alkyl group, a C₅₋₈ cycloalkyl group, and a C₆₋₁₀ aryl group.

The monomer B is preferably, for example, an alkyl (meth)acrylate, a (meth)acrylate having an aliphatic hydrocarbon group, and an aryl (meth)acrylate. These monomers may have a substituent. Examples of the alkyl (meth)acrylate include methyl (meth)acrylate, ethyl (meth)acrylate, propyl (meth)acrylate, n-butyl (meth)acrylate, tert-butyl (meth)acrylate, isobutyl (meth)acrylate, 2-ethylhexyl (meth)acrylate, n-stearyl (meth)acrylate, and benzyl (meth)acrylate. Examples of the (meth)acrylate having an aliphatic hydrocarbon group include cycloalkyl (meth)acrylate (e.g., cydohexyl (meth)acrylate), and a (meth)acrylate having a crosslinked cyclic hydrocarbon group (e.g. isobornyl (meth)acrylate). Examples of the aryl (meth)acrylate include phenyl (meth)acrylate and tolyl (meth)acrylate. Note that the monomer B is not limited thereto. The monomer B may be of one kind or a combination of two or more kinds.

Among these monomers B, an alkyl (meth)acrylate in which the hydrophobic group is an alkyl group is preferred. When the hydrophobic group is an alkyl group, the obtained acrylic resin exhibits more desirable hydrophobicity as a dispersant for the metal fine particles. Therefore, the dispersibility and the storage stability of the metal fine particles can be improved. Also, the obtained acrylic resin tends to easily separate from the metal fine particles, and the firing can be allowed to proceed even at a low temperature.

The acrylic resin may have a unit derived from a monomer C different from the units derived from the monomer A and the monomer B. The monomer C is selected so as to have little influence on the hydrophilicity and hydrophobicity imparted by the monomer A and the monomer B and on the performance (e.g., thermal decomposition ability) of the acrylic resin to serve as a dispersant. The monomer C may be any monomer that is polymerizable with the monomer A and/or the monomer C, and is not particularly limited to an acrylic monomer, but, in view of the ease of polymerization with the monomer A and/or the monomer B, the monomer C is preferably, for example, an acrylic monomer (e.g., (meth)acrylate). The monomer C can be selected from, for example, glycidyl methacrylate, glycerin monomethacrylate, N, N, N-trimethyl-N-(2-hydroxy-3-methacryloyloxypropyl)-ammonium chloride, and an urethane acrylate.

The monomer C may be a monomer having a heterocycle. When the acrylic resin has a unit derived from a monomer having a heterocycle, excellent adhesion to a base material can be secured. Examples of the heteroatom that the heterocycle has include oxygen atom, nitrogen atom, and sulfur atom. The heterocycle may have one kind or two or more kinds of heteroatoms. The heterocycle may contain any number of heteroatoms. The number of heteroatoms contained in the heterocycle may be one, or two or more. The number of heteroatoms contained in the heterocycle may be, for example, four or less, orthree or less. These lower and upper limits can be combined in any combination. The heterocycle may be either saturated or unsaturated. The heterocycle may be, for example, a 3- or more-membered ring, and may be a 4- or more-membered ring or a 5- or more-membered ring. The heterocycle may be, for example, a 3- or more- and 8- or less-membered ring (or 6- or less-membered ring), may be a 4- or more- and 8- or less-membered ring (or 6- or less-membered ring), and may be a 5- or more- and 8- or less-membered ring (or 6- or less-membered ring).

The monomer C having a heterocycle may be, for example, a (meth)acrylate having a heterocycle. The monomer C having a heterocycle may be, for example, a (meth)acrylate of a hydroxy compound having a heterocycle (e.g., alkyl alcohol having a heterocycle). Examples of the heterocycle include an oxygen-containing ring (e.g., tetrahydrofuran, dioxolane, furan, tetrahydropyran, dioxane), a nitrogen-containing ring (e.g., pyrrolidine, pyrrole, imidazoline, pyrimidine), a sulfur-containing ring (e.g., tetrahydrothiophene, thiophene), and a heterocycle having two or more kinds of heteroatoms (e.g., oxazole, thiazole, morpholine). The alkyl alcohol is, for example, a C₁₋₁₀ alkyl alcohol (e.g., C₁₋₆ alkyl alcohol or C₁₋₄ alkyl alcohol). Examples of the alkyl alcohol include methanol, ethanol, propanol, 2-propanol, butanol, and hexanol. Among them, a (meth)acrylate having an oxygen-containing ring (e.g., furfuryl (meth)acrylate) is preferred, in view its easy availability and ensuring excellent adhesion to a base material.

In the acrylic resin containing the units of the monomer A and the monomer B, and the unit of the other monomer C as necessary, the content of the unit of the monomer A is preferably 10 to 50 mass%, more preferably 15 to 30 mass%. In this case, the acrylic resin exhibits hydrophilicity more suitable as a dispersant forthe metal particle dispersion. Moreover, in synthesizing the acrylic resin, the hydrophilicity is unlikely to increase too high, and the polymerization of the monomer can proceed stably. The content of the unit of the monomerA corresponds to the mass ratio of the monomer A to the total mass of the raw material monomers of the acrylic resin.

The content of the unit of the monomer B is preferably 50 mass% to 90 mass%, more preferably 70 mass% to 85 mass%. In this case, the acrylic resin exhibits hydrophobicity more suitable as a dispersant forthe metal particle dispersion. The content of the unit of the monomer B corresponds to the mass ratio of the monomer B to the total mass of the raw material monomers of the acrylic resin.

The content of the unit of the monomer C is, for example, 30 mass% or less, preferably 10 mass% or less. In view of ensuring excellent adhesion, the content of the monomer C is preferably 1 mass% or more. The content of the unit of the monomer C corresponds to the mass ratio of the monomer C to the total mass of the raw material monomers of the acrylic resin.

The acrylic resin has, at least at one end of the main chain, a functional group selected from the group consisting of a carboxylic acid group and a carboxylic acid salt group. The number of carboxylic acid groups and/or carboxylic acid salt groups is not limited. The acrylic resin preferably has, at one end of the main chain, a carboxylic acid group and/or a carboxylic acid salt group. In this case, within the metal fine particle dispersion, a portion having hydrophobicity of the acrylic resin can expand spatially, and the distance between the metal fine particles tends to moderately maintained. Note that the acrylic resin may also have the above-mentioned functional group on the side chain, but in view of maintaining a moderate distance between the metal fine particles, the number of the functional groups on the side chain is preferably as small as possible, and more preferably, no functional group is present on the side chain.

The carboxylic acid salt group is, for example, an ammonium salt or a metal salt. Examples of the metal salt include an alkali metal salt (e.g., sodium salt, potassium salt), and an alkaline earth metal salt (e.g. calcium salt).

It can be confirmed that the carboxylic acid group and/orthe carboxylic acid salt group has been introduced at least to one end of the main chain of the acrylic resin, by, for example, measuring the acid value or amine value of the acrylic resin in a manner as described below. When the carboxylic acid group and/or the carboxylic acid salt group has been introduced at least to one end of the main chain of the acrylic resin, the acid value or amine value is, for example, 3 mg/g to 15 mg/g.

### (Acid value)

First, 1 g of the acrylic resin is weighed as a sample and dissolved in 100 g of isopropanol. Next, the resultant solution is titrated to neutralization with 0.1 N potassium hydroxide aqueous solution, using phenolphthalein as an indicator, to measure the number of milligrams (mg) of the potassium hydroxide required to neutralize 1 g of the acrylic resin, thereby to determine an acid value of the acrylic resin.

### (Amine value)

First, 1 g of the acrylic resin is weighed as a sample and dissolved in 100 g of isopropanol. Next, the resultant solution is titrated to neutralization with 0.1 N hydrochloric acid aqueous solution, using methyl orange as an indicator, to measure the number of milligrams (mg) of the potassium hydroxide equivalent to the acid required to neutralize 1 g of the acrylic resin, thereby to determine an amine value of the acrylic resin.

The acrylic resin has a weight-average molecular weight of preferably 5,000 to 100,000, more preferably 10,000 to 50,000. In this case, the viscosity of the metal fine partide dispersion containing the acrylic resin is unlikely to increase too high, and the dispersibility and the storage stability of the metal fine particles tend to be enhanced. Moreover, the acrylic resin as above readily decomposes at a low temperature, allowing the firing of the metal fine particles to proceed at a low temperature. The weight-average molecular weight can be determined by, for example, gel permeation chromatography (GPC) measurement based on polystyrene.

### [Method for producing acrylic resin]

A method for producing an acrylic resin according to the present embodiment includes, for example: a step of preparing a liquid polymerization mixture containing a (meth)acrylate monomer A having a polyalkylene glycol moiety, a polymerization initiator, and a chain transfer agent, wherein at least one of the chain transfer agent and the polymerization initiator has at least one carboxylic acid group and/or carboxylic acid salt group; and a step of allowing the monomer A to polymerize in the liquid polymerization mixture, to synthesize an acrylic resin containing a unit of the monomer A and having the carboxylic acid group and/or carboxylic acid salt group at least at one end.

The liquid polymerization mixture contains the monomer A and, as necessary, a monomer B, and may further contain another monomer C.

The content of the monomer A and the content of the monomer B in the whole monomer may be selected according to a desired structure of the acrylic resin.

The content of the whole monomer in the liquid polymerization mixture (monomer concentration) is preferably 30 mass% to 80 mass%, more preferably 40 mass% to 70 mass%. In this case, the polymerization of the monomer is likely to proceed smoothly.

The carboxylic acid group and/or the carboxylic acid salt group may be introduced at least to one end of the main chain by any method. One possible method is, for example, in synthesizing an acrylic resin, to use a polymerization initiator having at least one carboxylic acid group and/or carboxylic acid salt group, or a chain transfer agent having at least one carboxylic acid group and/or carboxylic acid salt group. Either one of the polymerization initiator and the chain transfer agent may be used singly, or the polymerization initiator and the chain transfer agent may be used in combination. Also, a carboxylic acid group and/or a carboxylic acid salt group may be introduced only to one end of the main chain of the acrylic resin, or introduced to both ends of the main chain.

The acrylic resin is synthesized by polymerizing the monomer A, the monomer B, and, as necessary, the other monomer C, by a known polymerization method, such as radical polymerization or cationic polymerization. Polymerization is started by a polymerization initiator that decomposes when exposed to heat or light and generates radicals or ions. Therefore, in the synthesis of the acrylic resin, a polymerization initiator that decomposes when exposed to heat or light and generates radicals or ions is used.

Examples of the polymerization initiator having at least one carboxylic acid group and/or carboxylic acid salt group include, but not limited to, disuccinic acid peroxide, 4,4'-azobis(4-cyanovaleric acid), and salts thereof (e.g., ammonium salt, sodium salt, potassium salt, calcium salt). Specific examples thereof include initiators commercially available under the tradenames of Peroyl SA (available from NOF Corporation) and V-501 (available from Wako Pure Chemical Corporation). These polymerization initiators may be used singly or in combination of two or more kinds. Preferred among them is disuccinic acid peroxide, in terms of its high initiator efficiency.

Examples of the chain transfer agent having at least one carboxylic acid group and/or carboxylic acid salt group include, but not limited to, a mercaptocarboxylic acid (e.g., 2-mercaptopropionic acid, 3-mercaptopropionic acid, mercaptoacetic acid, mercaptosuccinic acid), and salts thereof (e.g., ammonium salt, sodium salt, potassium salt, calcium salt). These chain transfer agents may be used singly or in combination of two or more kinds. Preferred among them is 3-mercaptopropionic acid, in terms of the ease of adjustment of the weight-average molecular weight of the acrylic resin.

As the polymerization initiator and the chain transfer agent contained in the liquid polymerization mixture, other than the polymerization initiator or the chain transfer agent having a carboxylic acid group and/or a carboxylic acid salt group, a polymerization initiator and a chain transfer agent having neither a carboxylic acid group nor a carboxylic acid salt group may be used. Such a polymerization initiator and a chain transfer agent may be, for example, known ones.

The polymerization initiator having neither a carboxylic acid group nor a carboxylic acid salt group is not limited, and may be a typical polymerization initiator used for polymerization of a (meth)acrylate monomer. Examples thereof include an azo-based polymerization initiator (e.g., azobisisobutyronitrile (AIBN)), an organic peroxide-based polymerization initiator (e.g., peroxyketal, hydroperoxide, dialkyl peroxide, peroxydicarbonate, diacyl peroxide, peroxy ester). These may be used singly or in combination of two or more kinds.

The polymerization initiator is contained in the liquid polymerization mixture in an amount of preferably 0.1 parts by mass to 5 parts by mass, more preferably 0.2 parts by mass to 3 parts by mass, per 100 parts by mass of the total amount of the monomers. In this case, the polymerization conversion increases, and unreacted initiator is unlikely to remain in excess after the polymerization.

The chain transfer agent having neither a carboxylic acid group nor a carboxylic acid salt group is not limited, and may be, for example, a thiol compound. Examples of the chain transfer agent include an alkyl mercaptan (e.g., n-butyl mercaptan, t-butyl mercaptan, n-octyl mercaptan, t-octyl mercaptan, n-dodecyl mercaptan, t-dodecyl mercaptan), and an ester of mercaptocarboxylic acid (e.g., alkyl mercaptopropionate, such as 2-ethylhexyl-3-mercaptopropionate, n-octyl-3-mercaptopropionate, methoxybutyl-3-mercaptopropionate, and stearyl-3-mercaptopropionate). These may be used singly or in combination of two or more kinds.

The chain transfer agent is contained in the liquid polymerization mixture in an amount of preferably 0.1 to 10 parts by mass, more preferably 0.2 to 5 parts by mass, per 100 parts by mass of the total amount of the monomers. In this case, an acrylic resin having a desired weight-average molecular weight can be easily synthesized.

The liquid polymerization mixture may contain, for example, a solvent, as necessary, in addition to the monomers, the polymerization initiator, and the chain transfer agent. The kind of the solvent is selected as appropriate from known solvents, depending on the monomers and the like. Examples of the solvent include esters (e.g., ethyl acetate, butyl acetate), hydrocarbons (e.g. toluene), ethers (e.g., methyl cellosolve, dioxane, butyl carbitol), ketones (e.g., methyl ethyl ketone, methyl isobutyl ketone), terpenes (e.g., terpene alcohols, such as dihydroterpineol and terpineol), esters of terpene alcohols (e.g., dihydroterpineol acetate). These solvents may be used singly or in combination of two or more kinds.

In preparing a liquid polymerization mixture, the monomer, the polymerization initiator, the chain transfer agent, the solvent, and other components may be mixed together at the same time or added successively. After mixing some of the components together, the rest may be added thereto. For example, after mixing the monomer, the polymerization initiator, the chain transfer agent, and the solvent together at room temperature to prepare a liquid polymerization mixture, and heating the mixture, the polymerization initiator may be added thereto.

Polymerization is started by the polymerization initiator. By allowing at least the monomerAto polymerize in the liquid polymerization mixture and allowing the chain transfer agent to terminate the polymerization reaction of the main chain, an acrylic resin containing a unit of the monomerA is synthesized. In this process, when at least one of the chain transfer agent and the polymerization initiator has a carboxylic acid group and/or a carboxylic acid salt group, the carboxylic acid group and/or the carboxylic acid salt group is introduced at least to one end of the main chain of the acrylic resin.

The method of preparing a liquid polymerization mixture and the method of polymerization using the liquid polymerization mixture are not particularly limited. For example, a liquid polymerization mixture can be prepared by adding a monomer, a chain transfer agent, a solvent, and other components, each in a predetermined amount, into a separable flask equipped with a stirrer, a cooler, a thermometer, a hot water bath, and a nitrogen gas inlet, and stirring together.

The liquid polymerization mixture is bubbled with nitrogen gas, to remove the dissolved oxygen in the liquid polymerization mixture. Then, the atmosphere in the separable flask is replaced with nitrogen gas, and the temperature is raised to a predetermined temperature under stirring. Next, a solution of a polymerization initiator diluted with a solvent is added to the liquid polymerization mixture, to start polymerization. After a predetermined time from the start of polymerization, the liquid reaction mixture is cooled to room temperature, to terminate the polymerization, and the solvent is removed by drying, whereby an acrylic resin can be obtained.

The polymerization temperature is determined as appropriate depending on the kind of the monomer and the like, but is, for example, 60 °C to 100 °C. The polymerization time is determined as appropriate depending on the kind of the monomer, the polymerization temperature, and the like, but is, for example, 2 h to 24 h.

### [Metal fine particle dispersion]

The acrylic resin according to the present embodiment can be suitably used as a dispersant for a metal fine particle dispersion. The metal fine particle dispersion includes metal fine particles, a dispersant, and a dispersion medium.

The metal fine particle dispersion of the present embodiment includes an acrylic resin as the dispersant, the acrylic resin not only having a polyalkylene glycol moiety but also having a carboxylic acid group and/or a carboxylic acid salt group at least at one end of the main chain, and therefore, is excellent in the dispersibility and the storage stability of the metal fine particles. Furthermore, when the metal fine particle dispersion is fired, the dispersant tends to separate from the metal fine particles, allowing the firing to proceed even at a low temperature. Therefore, the metal fine particle dispersion of the present embodiment can be suitably used as a metal ink or a metal paste used for forming fine electrodes, circuits, and other components of electronics.

Typically, a metal ion and a metal paste differ in the amount of the dispersion medium contained therein. A metal fine particle dispersion in which the blending ratio of the dispersion medium is high and the viscosity is low is called a metal ink. A metal fine particle dispersion in which the blending ratio of the dispersion medium is low and the viscosity is high is called a metal paste. Accordingly, depending on its application, the metal fine particle dispersion may be a metal ink or a metal paste.

The metal fine particles is made of a metal material, such as single metal or an alloy. The single metal or the metal element contained in the alloy may be, for example, a typical metal element or a transition metal element. Examples of the typical metal element include zinc (Zn), aluminum (Al), gallium (Ga), indium (In), germanium (Ge), tin (Sn), lead (Pb), antimony (Sb), and bismuth (Bi). Examples of the transition metal element include titanium (Ti), zirconium (Zr), vanadium (V), chromium (Cr), manganese (Mn), iron (Fe), ruthenium (Ru), cobalt (Co), nickel (Ni), palladium (Pd), platinum (Pt), silver (Ag), copper (Cu), and gold (Au). The alloy preferably contains two or more of these metal elements. Particularly, the alloy preferably contains at least one selected from silver and copper, and the metal material is preferably, for example, single Ag, an Ag alloy, single Cu, or a Cu alloy. The metal fine particles may include two or more kinds of metal fine particles differing in materials.

The metal fine particles have an average diameter of preferably 5 nm to 500 nm, more preferably 5 nm to 100 nm. When the metal fine particles have such an average diameter, the sintering thereof at a low temperature can be allowed to proceed with ease, and a resultant conductive film tends to have a high electrical conductivity.

The average diameter means a particle diameter (D50) at 50% cumulative volume in a volumetric particle size distribution. The average particle diameter (D50) can be measured by a laser diffraction scattering method, using a laser diffraction-type particle size distribution analyzer.

The metal fine particles may be of any shape, such as spherical, ellipsoidal, polygonal, polygonal pyramid, flat (e.g., thin-sheet-like, scale-like, flake-like), or a shape similar thereto. In view of increasing the contact between the metal fine particles, the shape is preferably spherical, ellipsoidal, flat, or a shape similar thereto.

The metal fine particles may be commercially available ones, or may be formed by using vaporization of a metal material. Also, the metal fine particles may be produced by utilizing a chemical reaction in a liquid or gas phase.

The metal fine particles occupy preferably 10 mass% to 80 mass%, more preferably 20 mass% to 70 mass% of the metal fine particle dispersion, in view of enhancing the dispersibility.

The acrylic resin (dispersant) is contained in the metal fine particle dispersion in an amount of preferably 0.5 parts by mass to 10 parts by mass, more preferably 1 part by mass to 5 parts by mass, per 100 parts by mass of the metal fine particles (or a later-described colloid of the metal fine particles). When the amount of the acrylic resin is in the above range, the dispersibility and the storage stability of the metal fine particles are enhanced, and the decomposition of the acrylic resin during firing occurs with ease.

The dispersion medium for the metal fine particle dispersion may be liquid, examples of which include alcohols, ethers, esters, ketones, and hydrocarbons. The examples also include terpenes. These dispersion mediums may be used singly or in combination of two or more kinds.

Examples of the alcohols include methanol, ethanol, and cyclohexanol. Examples of the ethers include aliphatic ethers (e.g., chain ethers, such as diethyl ether, butyl carbitol, and methyl cellosolve), and cyclic ethers (e.g., tetrahydrofuran). Examples of the esters include aliphatic esters (e.g. ethyl acetate, butyl acetate, ethyl butyrate). Examples of the ketones include aliphatic ketones (e.g., chain ketones, such as acetone, ethyl methyl ketone, and methyl isobutyl ketone), and alicyclic ketones (e.g., cyclohexanone). Examples of the hydrocarbons include aliphatic hydrocarbons (e.g., hexane), alicyclic hydrocarbons (e.g., cyclohexane), and aromatic hydrocarbons (e.g., benzene, toluene). Examples of the terpenes include terpene alcohols (e.g. dihydroterpineol, terpineol), and esters of terpene alcohols (e.g., dihydroterpineol acetate).

The metal fine particle dispersion may contain a stabilizer, in addition to the metal fine particles, the dispersant, and the dispersion medium. By using the stabilizer, the metal fine particles can be prevented from aggregating with each other, and a moderate distance can be maintained therebetween, which can stabilize the metal fine particles.

The stabilizer may be added at the time of preparing a metal fine particle dispersion, but is preferably used in a state coordinated with the metal fine particles (metal colloid). The stabilizer can be coordinated with the metal fine particles, for example, by mixing the stabilizer together with the metal fine particles and, if necessary, heating the mixture, or by adding the stabilizer in the process of producing the metal fine particles.

The stabilizer may be, for example, an organic compound having a polar functional group to coordinate with the metal fine particles and a hydrophobic organic group. Examples of the polar functional group include an amino group, mercapto group, an oxygen-containing group (e.g., hydroxy group, including phenolic hydroxy group), carbonyl group, ester group, and carboxy group). The stabilizer may contain one kind or two or more kinds of polar functional groups.

Preferred among them is an organic amine, i.e., a compound containing an amino group, in view of the stability at room temperature. The organic amine may be primary, secondary, or tertiary, and may be cyclic amine or chain amine. Preferred is a primary amine (esp., primary chain amine), in view of the ease of coordination with the metal fine particles. Preferable examples of the organic amine include alkylamine (e.g., hexylamine, octylamine, decylamine, dodecylamine, myristylamine). In view of the high dispersion stability of the metal fine particles and the ease of removal in the firing process, a C₆₋₁₄ alkylamine or a C₈₋₁₂ alkylamine is preferable.

An amine having a small number of carbon atoms has high reactivity and, therefore, is sometimes detrimental to the storage stability. However, when the acrylic resin of the present invention is used as the dispersant, the storage stability can be kept high, despite using an amine having a small number of carbon atoms.

The stabilizer is preferably removed at an appropriate stage in the firing process, and therefore, is preferably a low-molecular compound (e.g., a compound having a molecular weight of 500 or less).

The stabilizer (preferably, the stabilizer coordinated to the metal fine particles) is contained in the metal fine particle dispersion in an amount of, for example, 0.1 parts by mass to 5 parts by mass, preferably 0.2 parts by mass to 2 parts by mass, per 100 parts by mass of the metal fine particles. When the amount of the stabilizer is in the above range, the metal fine particles can be readily stabilized in the metal fine particle dispersion, and the removal during the firing can be facilitated.

The metal fine particle dispersion may contain, as necessary, a known additive (e.g., leveling agent, adhesion imparting agent).

The metal fine particle dispersion according to the present invention are excellent in the dispersibility and the storage stability of the metal fine particles. For example, the prepared metal fine particle dispersion shows no precipitate even after stored at 25 °C for one month.

In the metal fine particle dispersion according to the present invention, the firing of the metal fine particles proceeds sufficiently even at a low temperature of about 100 to 200 °C. Therefore, as the substrate on which the metal fine particle dispersion is applied, a resin substrate (e.g., a substrate formed of a resin, such as polyimide, polyethylene terephthalate, polyethylene or naphthalate) can be used.

It can be confirmed that the firing of the metal fine particles has proceeded sufficiently, by, for example, firing the metal fine particle dispersion and measuring a volume resistivity in a manner as described below. When the volume resistivity is as low as 20 µΩ·cm or less, the firing can be regarded as having proceeded sufficiently.

### (Firing)

The metal fine particle dispersion is applied onto a glass substrate with a bar coater, and heated for firing at 120 °C for 30 min with a blower dryer.

### (Volume resistivity)

A surface resistivity is measured with a low resistivity meter by a four-point probe method, and converted into a volume resistivity using a film thickness that is measured by a contact-type thickness gauge.

### [Examples]

The present invention will be more specifically described below with reference to Examples and Comparative Examples. It is to be noted, however, that the present invention is not limited to the following Examples.

### [Example 1]

### (1) Synthesis of acrylic resin (dispersant)

In a 1-L separable flask equipped with a stirrer, a cooler, a thermometer, a hot water bath, and a nitrogen gas inlet, 100 parts by mass of a monomer mixture containing 22 mass% of methoxy polyethylene glycol monomethacrylate (monomerA, tradename "Light Ester 041 MA", available from Kyoeisha Chemical Co., Ltd., the number of repeating oxyethylene units = 30) and 78 mass% of isobutyl methacrylate (IBMA, monomer B), 1 part by mass of 3-mercaptopropionic acid (chain transfer agent), and 100 parts by mass of butyl carbitol (solvent) were mixed together, to prepare a liquid polymerization mixture.

The liquid polymerization mixture was bubbled with nitrogen gas for 20 min, to remove the dissolved oxygen therefrom. Then, the atmosphere in the separable flask was replaced with nitrogen gas, and the temperature was raised to 80 °C under stirring. Next, a solution of 0.5 parts by mass of azobisisobutyronitrile (AIBN, polymerization initiator) diluted with butyl carbitol was added to the liquid polymerization mixture. After 15 h from the start of polymerization, the reaction solution was cooled to room temperature, to terminate the polymerization, which formed a butyl carbitol solution of an acrylic resin. Then, 2,000 parts by mass of water was added to the resultant solution and stirred together, followed by filtering and drying, thereby to remove the butyl carbitol.

The obtained acrylic resin was evaluated by the following procedure.

The obtained acrylic resin was analyzed by gel permeation chromatography (GPC) using a column (tradename "GPC KF-802", available from Showa Denko K. K.). The weight-average molecular weight determined based on polystyrene was 15,000. The acrylic resin had a structure represented by the formula (1):

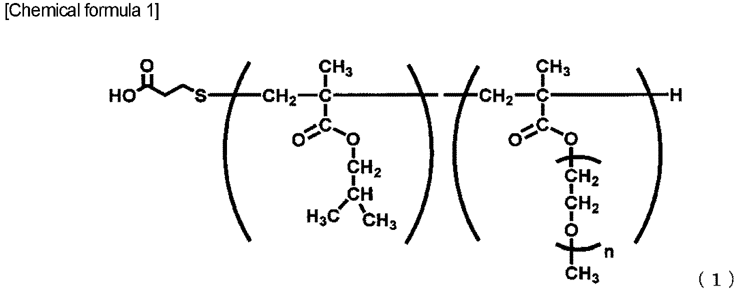

This was confirmed by an analysis using a nuclear magnetic resonance spectrometer (¹H-NMR, 400 MHz, available from JEOL Ltd.) and by a measurement of the acid value measurement as described above. The formula (1) shows that methoxy polyethylene glycol monomethacrylate and isobutyl methacrylate are randomly copolymerized. In the formula (1), n = 30. The acid value was 8 mg/g.

### (2) Preparation of metal fine particle dispersion (metal ink)

### (2-1) Production of silver colloid

First, 20 g of silver nitrate, 100 g of isobutanol, and 100 g of dodecylamine (stabilizer) were mixed together. The mixture was heated until its temperature reached 100 °C, and then refluxed for 5 h. Next, the solid content in the resultant mixture was precipitated by centrifugation, and collected. The collected solid content was washed with methanol three times, and then centrifuged, to collect a silver colloid of silver fine particles coordinated with dodecylamine.

### (2-2) Preparation of silver particle dispersion

First, 100 parts by mass of the silver colloid prepared in (2-1), 1 part by mass of the acrylic resin prepared in (1), and 100 parts by mass of cyclohexanol (dispersion medium) were mixed together. Next, the mixture was stirred with a homogenizer, and then filtered and purified through a 1-µm filter, to prepare a silver fine particle dispersion. In the silver fine particle dispersion, the silver fine particles occupied 50 mass%, and the amount of the dodecylamine was 0.2 parts by mass per 100 parts by mass of the silver fine particles.

The silver fine particles had an average diameter of 40 nm. The average diameter is a particle diameter (D50) at 50% cumulative volume in a volumetric particle size distribution that can be measured by a laser diffraction scattering method, using a laser diffraction-type particle size distribution analyzer (tradename "Nanotrac Wave II-EX150", available from MicrotracBEL Corp.).

### (3) Evaluation of silver particle dispersion

### (3a) Evaluation of dispersion stability

The obtained silver fine particle dispersion was stored for one month at 25 °C, and checked forthe presence or absence of precipitates after the storage. When no precipitate was observed, it was rated as A, and when some precipitates were observed, it was rated as B.

### (3b) Evaluation of firing at low temperature

The silver fine particle dispersion was applied onto a glass substrate with a bar coater, and heated for firing at 120 °C for 30 min with a blower dryer. A surface resistivity was measured with a low resistivity meter (tradename "Loresta AX MCP-T370", available from Mitsubishi Chemical Analytech Co., Ltd.) by a four-point probe method, and converted into a volume resistivity using a film thickness that was measured by a contact-type thickness gauge (tradename "Dektak XT-E", available from Bruker Corporation).

### (3c) Evaluation of adhesion to substrate

The silver fine particle dispersion was checked for its adhesion to a substrate by a cross-cut test conforming to JIS K5600-5-6: 1999. Specifically, the silver particle dispersion was applied onto a glass substrate with a bar coater, and dried at 120 °C for 30 min to form a coating film having a thickness of 2 µm. The coating film was provided with cuts in a grid pattern (cross-cut), each grid having a size of 2 mm × 2 mm, with a cutter. A25-mm-wide transparent pressure-sensitive adhesive tape cut in a length of about 75 mm was attached to the coating film, such that the center of the tape in its longitudinal direction approximately agrees with the center of the cut region. The tape was pressed and rubbed with a finger against the cut region of the coating film, so that the tape was flattened around its center over a length of at least 20 mm. Within 5 min after the tape was attached, the tape was peeled off at an angle of 90° all at once. A ratio (%) of an area left unpeeled within a portion with the tape attached in the cut region was determined, and with reference to this ratio, the adhesion to the substrate was evaluated. A higher ratio indicates that the adhesion is more excellent.

### [Example 2]

A silver fine partide dispersion was prepared and evaluated in the same manner as in Example 1, except that the acrylic resin was blended in an amount of 3 parts by mass.

### [Example 3]

A silver fine particle dispersion was prepared and evaluated in the same manner as in Example 1, except that the acrylic resin was blended in an amount of 5 parts by mass.

### [Example 4]

An acrylic resin and a silver fine particle dispersion were prepared and evaluated in the same manner as in Example 2, except that, in synthesizing the acrylic resin, the chain transfer agent was used in an amount of 0.2 parts by mass. The synthesized acrylic resin had a structure represented by the formula (1), where n = 30, and had an acid value of 3 mg/g and a weight-average molecularweight of 45,000.

### [Example 5]

An acrylic resin and a silver fine particle dispersion were prepared and evaluated in the same manner as in Example 2, except that, in synthesizing the acrylic resin, the chain transfer agent was used in an amount of 5 parts by mass. The synthesized acrylic resin had a structure represented by the formula (1), where n = 30, and had an acid value of 15 mg/g and a weight-average molecularweight of 9,000.

### [Example 6]

An acrylic resin and a silver fine particle dispersion were prepared and evaluated in the same manner as in Example 2, except that, in synthesizing the acrylic resin, the monomer A was changed from "Light Ester 041 MA" to "Light Ester 130MA" (methoxy polyethylene glycol monomethacrylate, available from Kyoeisha Chemical Co., Ltd., the number of repeating oxyethylene units = 9).

The synthesized acrylic resin had a structure represented by the formula (1), where n = 9, and had an acid value of 9 mg/g and a weight-average molecularweight of 16,000.

### [Example 7]

An acrylic resin and a silver fine particle dispersion were prepared and evaluated in the same manner as in Example 2, except that, in synthesizing the acrylic resin, the monomerAwas changed from "Light Ester 041 MA" to "NK Ester M-230G" (methoxy polyethylene glycol monomethacrylate, available from Shin-Nakamura Chemical Co., Ltd., the number of repeating oxyethylene units = 23).

The synthesized acrylic resin had a structure represented by the formula (1), where n = 23, and had an acid value of 7 mg/g and a weight-average molecularweight of 17,000.

### [Example 8]

An acrylic resin and a silver fine particle dispersion were prepared and evaluated in the same manner as in Example 2, except that, in synthesizing the acrylic resin, the monomerAwas changed from "Light Ester 041 MA" to "Blemmer PME 4000 (methoxy polyethylene glycol monomethacrylate, available from NOF Corporation, the number of repeating oxyethylene units = 90).

The synthesized acrylic resin had a structure represented by the formula (1), where n = 90, and had an acid value of 7 mg/g and a weight-average molecular weight of 19,000.

### [Example 9]

In synthesizing the acrylic resin, the initiator was changed from AlBN to disuccinic acid peroxide (tradename "Peroyl SA", available from NOF Corporation). The chain transfer agent was changed from 3-mercaptopropionic acid to dodecanethiol. An acrylic resin and a silver fine particle dispersion were prepared and evaluated in the same manner as in Example 2, except the above.

The synthesized acrylic resin had a structure represented by the formula (2):

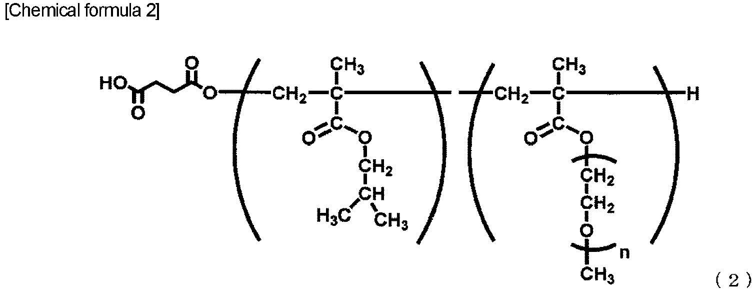

The formula (2) shows that methoxy polyethylene glycol monomethacrylate and isobutyl methacrylate are randomly copolymerized. In the formula (2), n = 30. The acid value was 8 mg/g, and the weight-average molecular weight was 20,000.

### [Example 10]

An acrylic resin and a silver fine particle dispersion were prepared and evaluated in the same manner as in Example 9, except that, in synthesizing the acrylic resin, the monomer A was changed from "Light Ester 041 MA" to "Light Ester 130MA" (methoxy polyethylene glycol monomethacrylate, available from Kyoeisha Chemical Co., Ltd., the number of repeating oxyethylene units = 9).

The synthesized acrylic resin had a structure represented by the formula (2), where n = 9, and had an acid value of 9 mg/g and a weight-average molecular weight of 21,000.

### [Example 11]

An acrylic resin and a silver fine particle dispersion were prepared and evaluated in the same manner as in Example 9, except that, in synthesizing the acrylic resin, the monomerAwas changed from "Light Ester 041 MA" to "NK Ester M-230G" (methoxy polyethylene glycol monomethacrylate, available from Shin-Nakamura Chemical Co., Ltd., the number of repeating oxyethylene units = 23).

The synthesized acrylic resin had a structure represented by the formula (2), where n = 23, and had an acid value of 10 mg/g and a weight-average molecular weight of 19,000.

### [Example 12]

An acrylic resin and a silver fine particle dispersion were prepared and evaluated in the same manner as in Example 9, except that, in synthesizing the acrylic resin, the monomerAwas changed from "Light Ester 041 MA" to "Blemmer PME 4000 (methoxy polyethylene glycol monomethacrylate, available from NOF Corporation, the number of repeating oxyethylene units = 90).

The synthesized acrylic resin had a structure represented by the formula (2), where n = 90, and had an acid value of 7 mg/g and a weight-average molecular weight of 17,000.

### [Comparative Example 1]

First, 10 parts by mass of silver colloid and 90 parts by mass of cyclohexanol were mixed together. Next, the mixture was stirred with a homogenizer, and then filtered and purified through a 1-µm filter, to prepare a silver fine particle dispersion. No acrylic resin was added in the silver fine partide dispersion. The prepared silver fine particle dispersion was evaluated similarly to in Example 1.

### [Comparative Example 2]

An acrylic resin and a silver fine particle dispersion were prepared and evaluated in the same manner as in Example 2, except that, in synthesizing the acrylic resin, the chain transfer agent was changed from 3-mercaptopropionic acid to dodecanethiol, which was used in an amount of 2 parts by mass per 100 parts by mass of the monomer mixture.

### [Comparative Example 3]

An acrylic resin and a silver fine particle dispersion were prepared and evaluated in the same manner as in Example 2, except that, in synthesizing the acrylic resin, no monomer A was used.

### [Comparative Example 4]

In synthesizing the acrylic resin, the monomer A and the monomer B were used in an amount of 21 parts by mass and 77 parts by mass, respectively, and methacrylic acid (MA) was additionally used as a monomer in an amount of 2 parts by mass. An acrylic resin and a silver fine particle dispersion were prepared and evaluated in the same manner as in Comparative Example 2, except the above.

The synthesized acrylic resin had a structure represented by the formula (3):

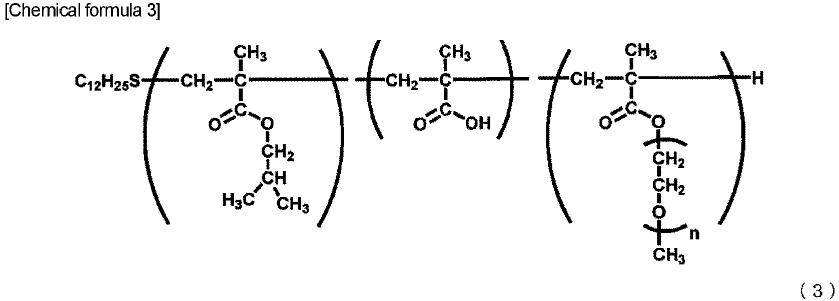

The formula (3) shows that methoxy polyethylene glycol monomethacrylate, isobutyl methacrylate, and methacrylic acid are randomly copolymerized. In the formula (3), n = 30. The acid value was 10 mg/g, and the weight-average molecular weight was 16,000.

### [Example 13]

In synthesizing the acrylic resin, the monomer B was used in an amount of 73 parts by mass, and "Light Ester THF (1000)" (tetrahydrofurfuryl methacrylate, available from Kyoeisha Chemical Co., Ltd.) was used as another monomer C. An acrylic resin and a silver fine particle dispersion were prepared and evaluated in the same manner as in Example 5, except the above.

The synthesized acrylic resin had an acid value of 15 mg/g and a weight-average molecular weight of 34,000.

### [Example 14]

In synthesizing the acrylic resin, the monomer B was used in an amount of 73 parts by mass, and "SR611" (alkoxylated tetrahydrofurfuryl acrylate, available from Sartomer LLC) was used as another monomer C. An acrylic resin and a silver fine particle dispersion were prepared and evaluated in the same manner as in Example 5, except the above.

The synthesized acrylic resin had an acid value of 15 mg/g and a weight-average molecular weight of 23,000.

The compositions of the dispersants of Examples and Comparative Examples are shown in Table 1. The results of Examples and Comparative Examples are shown in Table 2. Table 1 also shows the raw material and the amount (charge amount) of the dispersant and the amount of the dispersant blended in the silver colloid.

**[Table 1]**

| | | Dispersant | | | | | | | | | |
|---|---|---|---|---|---|---|---|---|---|---|---|
| | | Raw material | | | | | Change amount (parts by mass) | | | | |
| | | Monomer | | | Polymerization initiator | Chain transfer agent | Monomer | | | Polymerization initiator | Chain transfer agent |
| | | A | B | C | | | A | B | C | | |
| Ex. | 1 | 041 MA | IBMA | - | AIBN | 3-MPA | 22 | 78 | 0 | 0.5 | 1 |
| | 2 | 041 MA | IBMA | - | AIBN | 3-MPA | 22 | 78 | 0 | 0.5 | 1 |
| | 3 | 041 MA | IBMA | - | AIBN | 3-MPA | 22 | 78 | 0 | 0.5 | 1 |
| | 4 | 041 MA | IBMA | - | AIBN | 3-MPA | 22 | 78 | 0 | 0.5 | 0.2 |
| | 5 | 041 MA | IBMA | - | AIBN | 3-MPA | 22 | 78 | 0 | 0.5 | 5 |
| | 6 | 130MA | IBMA | - | AIBN | 3-MPA | 22 | 78 | 0 | 0.5 | 1 |
| | 7 | M-230A | IBMA | - | AIBN | 3-MPA | 22 | 78 | 0 | 0.5 | 1 |
| | 8 | PME | IBMA | - | AIBN | 3-MPA | 22 | 78 | 0 | 0.5 | 1 |
| | 9 | 041 MA | IBMA | - | SA | DDT | 22 | 78 | 0 | 1 | 1 |
| | 10 | 130MA | IBMA | - | SA | DDT | 22 | 78 | 0 | 1 | 1 |
| | 11 | M-230A | IBMA | - | SA | DDT | 22 | 78 | 0 | 1 | 1 |
| | 12 | PME | IBMA | - | SA | DDT | 22 | 78 | 0 | 1 | 1 |
| | 13 | 041 MA | IBMA | THF | AIBN | 3-MPA | 22 | 73 | 5 | 0.5 | 5 |
| | 14 | 041 MA | IBMA | SR611 | AIBN | 3-MPA | 22 | 73 | 5 | 0.5 | 5 |
| Com. Ex. | 1 | - | - | - | - | - | - | - | - | - | - |
| | 2 | 041 MA | IBMA | - | AIBN | DDT | 22 | 78 | 0 | 0.5 | 2 |
| | 3 | - | IBMA | - | AIBN | 3-MPA | 0 | 100 | 0 | 0.5 | 1 |
| | 4 | 041 MA | IBMA | MA | AIBN | DDT | 21 | 77 | 2 | 0.5 | 2 |

| | | | | | | | | | | | |
|---|---|---|---|---|---|---|---|---|---|---|---|
| 041MA: Light Ester 041M (n=30) 130MA: Light Ester130MA (n=30) M-230G: NK Ester M-230G (n=23) PME: Blemmer PME-4000 (n=90) IBMA: isobutyl methacrylate THF: Light Ester THF (1000) SR611: alkoxylated tetrahydrofurfuryl acrylate MA: methacrylic acid AlBN: azobisisobutyronitrile SA: Peroyl SA (disuccinic acid peroxide) 3MPA: 3-mercaptopropionic acid DDT: dodecanethiol | | | | | | | | | | | |

**[Table 2]**

| | | Dispersant | Metal fine particle dispersant | Evaluation | | |
|---|---|---|---|---|---|---|
| | | Acid value (mg/g) | Amount of dispersant * (parts by mass) | Dispersion stability at 25°C for 1 M | Volume resistivity (µΩ·cm) | Adhesion to substrate (%) |
| Ex. | 1 | 8 | 1 | A | 5 | 0 |
| | 2 | 8 | 3 | A | 4 | 0 |
| | 3 | 8 | 5 | A | 9 | 0 |
| | 4 | 3 | 3 | A | 11 | 0 |
| | 5 | 15 | 3 | A | 12 | 0 |
| | 6 | 9 | 3 | A | 9 | 0 |
| | 7 | 7 | 3 | A | 7 | 0 |
| | 8 | 7 | 3 | A | 13 | 0 |
| | 9 | 8 | 3 | A | 11 | 0 |
| | 10 | 9 | 3 | A | 13 | 0 |
| | 11 | 10 | 3 | A | 12 | 0 |
| | 12 | 7 | 3 | A | 14 | 0 |
| | 13 | 15 | 3 | A | 16 | 95 |
| | 14 | 15 | 3 | A | 18 | 95 |
| Com. Ex. | 1 | - | 0 | B | - | 0 |
| | 2 | 0 | 3 | B | - | 0 |
| | 3 | 8 | 3 | B | -** | 0 |
| | 4 | 10 | 3 | B | -** | 0 |

| | | | | | | |
|---|---|---|---|---|---|---|
| * Amount of dispersant per 100 parts by mass of silver colloid ** Measurement was impossible. | | | | | | |

The table shows that in the metal fine particle dispersions of Examples 1 to 14, in which an acrylic resin having a polyalkylene glycol moiety and having a carboxylic acid group at an end of the main chain was used as a dispersant, no precipitate was observed even after storage at 25 °C for one month, showing that the dispersibility and the storage stability were high. Furthermore, the volume resistivity after firing was low, showing that the firing at a low temperature had proceeded sufficiently.

In contrast, in the metal fine particle dispersions of Comparative Examples 2 to 4, like that of Comparative Example 1 in which no dispersant was used, some precipitates were observed after storage at 25 °C for one month, showing that the dispersibility and the storage stability were poor. Furthermore, the volume resistivity after firing was high, which could not be measured. This shows that the firing at a low temperature was insufficient.

The foregoing shows that the metal fine particle dispersion including an acrylic resin that has a polyalkylene glycol moiety and has a carboxylic acid group at an end of the main chain is excellent in dispersibility and storage stability. Furthermore, in such a metal fine particle dispersion, even when fired at a low temperature, the firing of the metal fine particles is allowed to proceed sufficiently even at a low temperature.

Moreover, Examples 13 and 14 including a monomer unit having a heterocycle exhibited excellent adhesion to the substrate.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

With the acrylic resin according to the present invention, it is possible to obtain a metal fine particle dispersion in which the dispersibility and the storage stability of the metal fine particles are high, and the firing of the metal fine particles is allowed to proceed even at a low temperature. The obtained metal fine particle dispersion is useful as a metal ink or a metal paste for forming fine electrodes, circuits, and other components of electronics. Note that, however, these applications should not be construed as limitations, and the acrylic resin is applicable to various applications.

## Claims

1. An acrylic resin containing a unit of a (meth)acrylate monomer A having a polyalkylene glycol moiety, the acrylic resin having at least at one end a functional group selected from the group consisting of a carboxylic acid group and a carboxylic acid salt group.

2. The acrylic resin of claim 1, wherein the number of repeating alkylene glycol units in the polyalkylene glycol moiety is 4 to 120.

3. The acrylic resin of claim 1 or 2, wherein the polyalkylene glycol moiety contains a polyethylene glycol moiety.

4. The acrylic resin of any one of claims 1 to 3 further containing a unit of a (meth)acrylate monomer B having a hydrophobic group.

5. The acrylic resin of claim 4, wherein the hydrophobic group is an alkyl group.

6. The acrylic resin of claim 4 or 5, wherein a content of the unit of the (meth)acrylate monomerA in the acrylic resin is 10 to 50 mass%.

7. The acrylic resin of any one of claims 1 to 6 having a weight-average molecularweight of 5,000 to 100,000.

8. The acrylic resin of any one of claims 1 to 7 further containing a unit of a monomer C having a heterocycle.

9. The acrylic resin of claim 8 at least containing a unit of a (meth)acrylate monomer having an oxygen-containing ring, as the monomer C.

10. A metal fine particle dispersion comprising the acrylic resin of any one of claims 1 to 9, fine particles of a metal, and a dispersion medium.

11. The metal fine particle dispersion of claim 10, wherein the metal includes at least one selected from silver and copper.

12. A method for producing an acrylic resin, the method comprising:
a step of preparing a liquid polymerization mixture containing a (meth)acrylate monomer A having a polyalkylene glycol moiety, a polymerization initiator, and a chain transfer agent, wherein at least one of the chain transfer agent and the polymerization initiator has at least one functional group selected from the group consisting of a carboxylic acid group and a carboxylic acid salt group; and
a step of allowing the (meth)acrylate monomerAto polymerize in the liquid polymerization mixture, to synthesize an acrylic resin containing a unit of the (meth)acrylate monomer A and having the functional group at least at one end.

13. The method of claim 12, wherein the chain transfer agent includes 3-mercaptopropionic acid.

14. The method of claim 12 or 13, wherein the polymerization initiator includes disuccinic acid peroxide.
